# EUROPÄISCHE PATENTSCHRIFT

(11) **EP 0 402 346 B1**
(45) Veröffentlichungstag und Bekanntmachung des Hinweises auf die Patenterteilung: **29.09.1993**
(21) Anmeldenummer: 90890159.8
(22) Anmeldetag: 22.05.1990
(51) Int. Cl.: B60B 33/08, A47C 13/00

(54) **Vorrichtung zur Anbringung an Stuhlbeinen od. dgl.**
Device for affixing chair legs or similar
Dispositif à installer sur les pieds de chaises ou similaires

(30) Priorität: 09.06.1989 AT 1433/89
(43) Veröffentlichungstag der Anmeldung: 12.12.1990
(73) Patentinhaber: Ameisbichler, Rudolf, A-3150 Wilhelmsburg (AT); Zöchling, Josef, A-3150 Wilhelmsburg (AT)
(72) Erfinder: Ameisbichler, Rudolf, A-3150 Wilhelmsburg (AT); Zöchling, Josef, A-3150 Wilhelmsburg (AT)
(74) Vertreter: Rippel, Andreas, Dipl.-Ing.

(56) Entgegenhaltungen:
- EP-A- 0 162 484
- CH-A- 403 640
- DE-A- 2 823 940
- FR-A- 540 669
- FR-A- 806 533
- US-A- 1 542 231
- US-A- 3 096 536

## Beschreibung

Die Erfindung bezieht sich auf eine Vorrichtung zur Anbringung an Stuhlbeinen od.dgl., mit einer am Boden abgestützten Rolle, die bei Belastung einfedert, um ein Aufsetzen des Stuhlbeines od.dgl. am Boden zu ermöglichen.

Es sind fahrbare Rollhocker bekannt, die insbesondere als Podest zum Erreichen von hochgelegenen Regalfächern oder Aufbauschränken dienen. Sie sind mit schwenkbar und federnd gelagerten Rollen versehen, die im unbelasteten Zustand ein leichtes Verschieben des Rollhockers gestatten, bei Belastung durch eine darauf stehende Person jedoch einschwenken, sodaß der Hocker fest am Boden steht.

Eine derartige Wirkungsweise wäre oft auch bei Stuhlbeinen erwünscht, weil ein Verschieben des nicht belasteten Stuhles Lärm und oft auch Beschädigungen des Bodens verursacht. Eine Anbringung der bekannten schwenkbaren Rollen ist jedoch bei Stuhlbeinen praktisch ausgeschlossen, weil die Rollen seitlich abstehen würden.

Man hat schon versucht, Stühle bei Nichtbelastung dadurch rollbar zu machen, daß an den Stuhlbeinen eine Hohlkugel drehbar gelagert wird, die sich bei Belastung so verformt, daß das Stuhlbein am Boden auflieft. Eine praktische Verwirklichung dieses Vorschlages stößt jedoch schon deshalb auf Schwierigkeiten, weil der innere Druck in der Hohlkugel nur sehr schwer auf dem richtigen Wert gehalten werden kann. Auch ist die Beanspruchung einer solchen Hohlkugel verhältnismäßig groß und es kann daher nur eine sehr geringe Lebensdauer erwartet werden.

Im Dokument FR-A-540.669 ist eine Vorrichtung zur Anbringung an Stuhlbeinen mit einer drehbar gelagerten, am Boden abgestützten Kugel beschrieben, die bei Belastung einfedert, um ein Aufsetzen des Stuhlbeines am Boden zu ermöglichen. Zur Lagerung der Kugel ist ein in axialer Richtung des Stuhlbeines in einer Büchse gleitbarer, die Kugel zu mehr als der Hälfte umfassender Schieber vorgesehen, gegen den eine in Richtung zum Boden hin wirkende Schraubenfeder anliegt. Die Kugel ist an der dem Boden abgewendeten Seite über Lagerkugeln im Schieber abgestützt, die in einem kalottenförmigen Aufnahmekanal angeordnet sind.

Dieser Aufnahmekanal ist zur Gänze mit Lagerkugeln gefüllt, so daß sich die Lagerkugeln bei einer Verschiebung des Stuhlbeines an Ort und Stelle drehen müssen, was große Reibungsverluste mit sich bringt und die Verschiebung des Stuhles erschwert.

Die Erfindung hat es sich zum Ziel gesetzt, eine Vorrichtung der oben genannten Art zu schaffen, bei der die Kugel mit geringsten Reibungsverlusten an den Lagerkugeln abrollen kann, so daß eine leichte Verschiebung des Stuhles möglich ist.

Erreicht wird dieses Ziel dadurch, daß an den kalottenförmigen Aufnahmekanal nach oben ein vertikaler zylinderförmiger Hohlraum anschließt, der nur teilweise mit Lagerkugeln gefüllt ist und durch welchen die Lagerkugeln beim Abrollen der Kugel auf die gegenüberliegende Seite zurückgeführt werden.

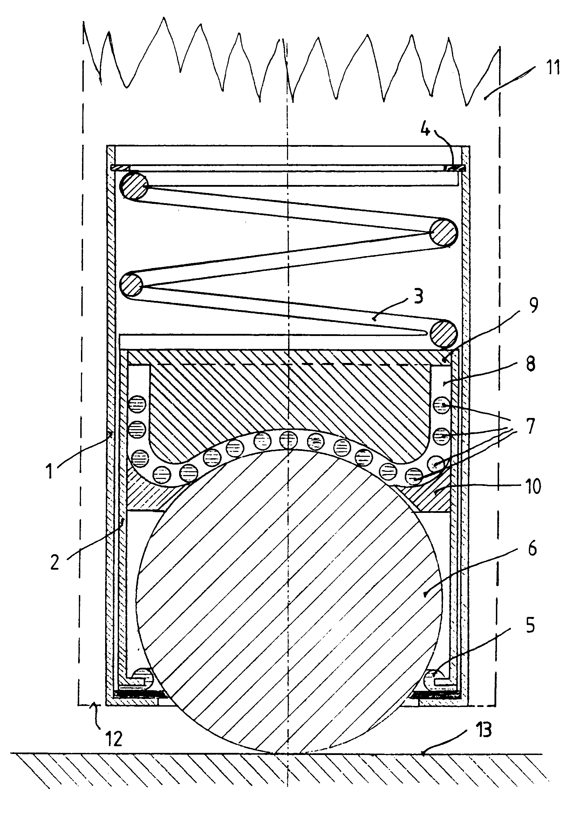

Nachstehend ist die Erfindung an Hand eines in der Zeichnung dargestellten Ausführungsbeispieles näher beschrieben, wobei die Zeichnung einen Längsschnitt durch eine erfindungsgemäße Vorrichtung wiedergibt.

In einer Büchse 1 ist ein Schieber 2 gleitbar gelagert, gegen den eine Schraubenfeder 3 anliegt. An der dem Schieber gegenüberliegenden Seite stützt sich die Schraubenfeder 3 an einem in der Büchse 1 befestigten Seegerring 4 ab. Der Schieber 2 umfaßt unter Zwischenhaltung eines Begrenzungsringes 5 eine zweckmäßig aus Hartgummi oder hartem Kunststoff bestehende volle Kugel 6 zu mehr als der Hälfte, sodaß die Kugel 6 nicht aus dem Schieber 2 herausfallen kann. Zweckmäßig befindet sich zwischen der Büchse 1 und den Schieber 2 am unteren Ende ein aus Filz (oder ähnlichem Material) bestehender Dichtring, der das Eindringen von Schmutzteilchen verhindert. An der dem Begrenzungsring 5 gegenüberliegenden Seite stützt sich die Kugel 6 an Lagerkugeln 7 ab. Diese Lagerkugeln 7 sind in einer Kugelpfanne 9 gelagert, die gleichzeitig die obere Begrenzung ergibt. Die Lagerkugeln 7 werden nach unten von einem Umleitring 10 begrenzt, der auf der Kugel 6 durch sein Eigengewicht aufliegt. Weiters hat der Umleitring 10 die Aufgabe, die Kugeln 7 in den ringförmigen Hohlraum 8, der sich zwischen der Kugelpfanne 9 und der Innenwand des Schiebers 2 befindet, zu führen. Der ringförmige Hohlraum 8 hat die Aufgabe, die Kugeln 7 beim Abrollen der großen Kugel 6 auf die gegenüberliegende Seite zurückzuführen.

Wie in der Zeichnung schematisch angedeutet ist, kann die Büchse 1 in einer Bohrung eines Stuhlbeines 11 eingesetzt sein. In der Zeichnung ist dabei der unbelastete Zustand des Stuhlbeines vorausgesetzt, bei dem die Kugel 6 über das untere Ende 12 des Stuhlbeines 11 vorsteht und sich am Boden 13 abstützt. Der Stuhl kann daher leicht in jede Richtung über den Boden gerollt werden, wobei die Kugel 6 an den Lagerkugeln 7 abrollt; diese Lagerkugeln 7 sind der besseren Deutlichkeit wegen in einem (nicht vorhandenen) Abstand voneinander gezeichnet.

Übersteigt eine auf den Stuhl wirkende Belastung die Kraft der Feder 3, wird diese zusammengedrückt, die Kugel 6 und der Schieber 2 gleiten nach oben und das untere Ende 12 des Stuhlbeines 11 setzt auf dem Boden 13 auf. Der Stuhl ist damit so auf dem Boden fixiert, als ob keine Rolle 6 vorhanden wäre. Naturgemäß wird auf allen Stuhlbeinen eines Stuhles je eine Kugelrolle 6 montiert werden.

Die erfindungsgemäße Vorrichtung ist nicht auf eine Anwendung bei Stuhlbeinen beschränkt. So könnte eine solche Anordnung z.B. auch bei den eingangs erwähnten Treppenhockern verwendet werden. Bei sehr schlanken Stuhlbeinen 11 wäre es möglich, eine Fortsetzung der Büchse 1 nach oben über das Stuhlbein zu schieben. Auch dann wäre keine Behinderung durch seitlich vorstehende Teile und auch keine wesentliche Veränderung des Aussehens des Stuhles gegeben.

## Patentansprüche

1. Vorrichtung zur Anbringung an Stuhlbeinen od. dgl., mit einer drehbar gelagerten, am Boden abgestützten Kugel (6), die bei Belastung einfedert, um ein Aufsetzen des Stuhlbeines (11) od. dgl. am Boden zu ermöglichen, wobei zur Lagerung der Kugel (6) ein in axialer Richtung des Stuhlbeines (11) od. dgl. in einer Büchse (1) gleitbarer, die Kugel zu mehr als der Hälfte umfassender Schieber (2) vorgesehen ist, gegen den eine in Richtung zum Boden (13) hin wirkende Schraubenfeder (3) anliegt, und ferner die Kugel (6) an der dem Boden (13) abgewendeten Seite über Lagerkugeln (7) im Schieber (2) abgestützt ist, die in einem kalottenförmigen Aufnahmekanal angeordnet sind, **dadurch gekennzeichnet,** daß an den kalottenförmigen Aufnahmekanal nach oben ein vertikaler zylinderförmiger Hohlraum (8) anschließt, der nur teilweise mit Lagerkugeln (7) gefüllt ist und durch welchen die Lagerkugeln (7) beim Abrollen der Kugel (6) auf die gegenüberliegende Seite zurückgeführt werden.

## Claims

1. Device, to be attached to chair-legs or similar, with a rotating ball (6) on bearings which touches the floor and engages under load so that the chair-leg (11) or similar is brought into contact with the floor, with the ball (6) resting on a sliding bar (2) which moves axially to the chair-leg (11) or similar in a bush (1) and covers more than half of the ball, and which touches on a coil spring (3) acting in the direction of the floor (13); the side of the ball (6) which faces away from the floor (13) being supported by bearing balls (7) housed in a dome-shaped retainer section of the sliding bar (2), **characterized in that** a vertical cylindrical cavity (8) is situated directly above the dome-shaped retainer section, which cavity (8) is only partially filled with bearing balls (7), and through which the bearing balls (7) return to the other side when the ball (6) is rotated.

## Revendications

1. Dispositif d'attachement aux pieds de chaise etc., avec une boule (6) tournante installée sur un coussinet à billes qui touche le plancher et compense les charges qui résultent du contact du pied de chaise (11) etc. avec le plancher; le tout contenant une coulisse (2) qui fonctionne comme palier de la boule (6), glisse parallèlement à l'axe du pied de chaise (11) etc. dans une douille (1), couvre plus que la moitié de la boule (6) et est en contact avec un ressort à boudin (3) agissant en direction du plancher (13); avec le côté de la boule (6) opposé au plancher (13) reposant sur des billes (7) de palier de la coulisse (2) qui se trouvent dans un récipient en forme de calotte, **caracterisé en ce qu'**une cavité cylindrique (8) verticale partiellement remplie de billes de palier (7) est située au-dessus du récipient en forme de calotte; quand la boule (6) tourne, les billes de palier (7) sont ramenées au côté opposé.
